(19) Europäisches Patentamt European Patent Office Office européen des brevets

(11) EP 4 788 003 A1

## (12) EUROPEAN PATENT APPLICATION

(43) Date of publication:
05.08.2026 Bulletin 2026/32

(21) Application number: 25222903.4

(22) Date of filing: 12.12.2025

(51) International Patent Classification (IPC):
H04W 72/0453 (2023.01)    H04W 24/02 (2009.01)

(52) Cooperative Patent Classification (CPC):
H04W 72/0453; G06N 3/006; G06N 20/00;
H04W 24/02; G06N 3/092; H04W 72/0457;
H04W 72/50

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 30.01.2025 IN 202521007790

(71) Applicant: Tata Consultancy Services Limited
Maharashtra (IN)

(72) Inventors:
• SUMITI, Sumiti
  560066 Bangalore, Karnataka (IN)
• PATRO, Sumanta
  751024 Bhubaneswa, Odisha (IN)
• RATH, Hemant Kumar
  751024 Bhubaneswa, Odisha (IN)

(74) Representative: Goddar, Heinz J.
Boehmert & Boehmert
Anwaltspartnerschaft mbB
Pettenkoferstrasse 22
80336 München (DE)

(54) **SYSTEMS AND METHODS FOR CONTEXT AWARE SPECTRUM ALLOCATION FOR INDOOR TERAHERTZ COMMUNICATION IN 6G**

(57)    The emergence of Sixth Generation (6G) wireless networks presents unprecedented opportunities for revolutionizing smart manufacturing environment through TeraHertz (THz) communication band. However, the associated unique characteristics pose significant challenges for reliable indoor communication. The present disclosure addresses these challenges by providing a context aware spectrum allocation system and method that capture user requirements/intents which are then translated to priority and fairness objectives. Based on mobility of Mobile-edge Entities (MEs), THz channel modelling and dynamic channel state updation are performed and context-based spectrum allocation is then done based on fairness and priority objectives. Further, dynamic mobility and updation of distance of users is captured with respect to a Base Station (BS). Q-learning technique is employed for adaptive decision making based on the reward function. Further, the system integrates Hungarian technique with the Q-learning for global optimization for dynamic sub-band allocation at infrastructure plane level.

200

receiving, at an application plane of a Base Station (BS), one or more requirements specific to an indoor TeraHertz (THz) communication scenario, wherein the one or more requirements pertain to a number of Mobile-edge Entities (MEs) and one or more Key Performance Indicators (KPIs) to execute one or more ME operations — 202

translating the one or more requirements to one or more service-level Quality of Service (QoS) constraints for the one or more ME operations — 204

categorizing the one or more service-level QoS constraints into a priority objective or a fairness objective based on the one or more ME operations — 206

allocating, by using a Quality-learning (Q-learning) and Hungarian technique, a sub-band to one or more MEs based on the one or more service-level QoS constraints categorized into the priority objective or the fairness objective (208), wherein the Q-learning and Hungarian technique comprises
capturing a mobility of the one or more MEs based on an associated velocity at one or more time instances (208a);
updating a position of the one or more MEs from the BS based on the mobility of one or more MEs (208b);
randomly allocating, by using the Q-learning of the Q-learning and Hungarian technique, a sub-band to each of the one or more MEs during a first phase of Q-learning based on the updated position of the one or more MEs (208c);
computing a performance metrics comprising (i) a Signal to Noise Ratio (SNR), (ii) a data rate achieved using the SNR, and (iii) a latency using a propagation delay of THz wave in a channel, a processing delay of the one or more MEs, a transmission delay of the BS, for the randomly allocated sub-band assigned to each of the one or more MEs (208d);
computing, by using the performance metrics, at least one set of rewards based on the randomly allocated sub-band (208e);
updating one or more Q-values of each state-action pair comprised in Q-matrix associated with the one or more MEs based on the at least one set of rewards to obtain an updated Q-matrix (208f); and
computing, by using the Hungarian technique of the Q-learning and Hungarian technique, a first cost matrix using the updated Q-matrix for an optimal allocation of one or more sub-bands to each of the one or more MEs in a second phase (208g)
— 208

**FIG. 3**

EP 4 788 003 A1

**Description**

CROSS-REFERENCE TO RELATED APPLICATIONS AND PRIORITY

The present application claims priority to Indian application no. 202521007790, filed on January 30, 2025.

TECHNICAL FIELD

The disclosure herein generally relates to indoor TeraHertz (THz) communication, and, more particularly, to systems and methods for context aware spectrum allocation for indoor TeraHertz communication in Sixth Generation (6G).

BACKGROUND

The advent of Industry 5.0 has brought about an unprecedented demand for ultra-fast wireless communication in manufacturing environments. With traditional communication bands becoming more congested, TeraHertz (THz) communication band (ranging from 0.1 to 10 THz) is emerging as a promising solution to meet the complex needs of smart manufacturing systems (e.g., refer "R. Liu et al., "Beginning of journey toward 6G: Vision and framework," IEEE Communications Magazine, vol. 61, no. 10, pp. 8-9, 2023."). THz bands offer massive bandwidth and high directionality, which bring both opportunities and challenges for industrial applications. In smart manufacturing scenarios, where dense networks of sensors, autonomous robots, and real-time control systems are common, there is a need for reliable, high-speed communication infrastructure to ensure smooth operations. Integrating THz communication in these environments requires spectrum allocation strategies that account for the unique propagation characteristics of THz waves while meeting the stringent demands of industrial applications, such as ultra-low latency and high reliability.
In 6G, to accomplish a wider bandwidth, it is envisioned to utilize a hefty spectrum range of higher frequency bands. The industry and research community have come to the conclusion that, in order to satisfy the Key Performance Indicators (KPIs) of the 6G and beyond, particularly pertaining to high data rate demand, harnessing spectrum at high frequencies is essential (e.g., refer "V. Petrov et al., "Last Meter Indoor TeraHertz Wireless Access: Performance Insights and Implementation Roadmap," IEEE Communications Magazine, vol. 56, no. 6, pp. 158-165, 2018."). In light of this, millimeter wave (mmWave) band covers 24-100 GigaHertz (GHz) range in the upper spectrum region of the 5G solutions (e.g., refer "J. Lee et al., "Spectrum for 5G: Global Status, Challenges, and Enabling Technologies," IEEE Communications Magazine, vol. 56, no. 3, pp. 12-18, 2018.", and "Z. Lin et al., "Millimeter-Wave Propagation Modeling and Measurements for 5G Mobile Networks," IEEE Wireless Communications, vol. 26, no. 1, pp. 72-77, 2019."). Nevertheless, given that the higher mmWave band's total continuous bandwidth is less than 10 GHz, it turns out to be quite challenging to employ for multi Gigabits Per Second (GbPS) data speed. These challenges have led to searching for novel wireless paradigms for 6G and beyond in THz band. The THz communication has been envisioned as a pivotal technology in 6G and beyond. However, some of the major challenges of THz band are the high spreading loss, high path loss, high absorption loss, etc.

SUMMARY

Embodiments of the present disclosure present technological improvements as solutions to one or more of the above-mentioned technical problems recognized by the inventors in conventional systems.
For example, in one aspect, there is provided a processor implemented method for context aware spectrum allocation for indoor TeraHertz communication in Sixth Generation (6G). The method comprises receiving, at an application plane of a Base Station (BS), via one or more hardware processors, one or more requirements specific to an indoor TeraHertz (THz) communication scenario, wherein the one or more requirements pertain to a number of Mobile-edge Entities (MEs) and one or more Key Performance Indicators (KPIs) to execute one or more ME operations; translating the one or more requirements to one or more service-level Quality of Service (QoS) constraints for the one or more ME operations; categorizing the one or more service-level QoS constraints into a priority objective or a fairness objective based on the one or more ME operations; and allocating, by using a Quality-learning (Q-learning) and Hungarian technique, a sub-band to the MEs based on the one or more service-level QoS constraints categorized into the priority objective or the fairness objective, wherein the Q-learning and Hungarian technique comprises: capturing a mobility of one or more MEs based on an associated velocity at one or more time instances; updating a position of the one or more MEs from the BS based on the mobility of one or more MEs; randomly allocating, by using the Q-learning of the Q-learning and Hungarian technique, a sub-band to each of the one or more MEs during a first phase of Q-learning based on the updated position of the one or more MEs; computing a performance metrics comprising (i) a Signal to Noise Ratio (SNR), (ii) a data rate achieved using the SNR, and (iii) a latency using a propagation delay of THz wave in a channel, a processing delay of the one or more MEs, a transmission delay of the BS, for the randomly allocated sub-band assigned to each of the one or more MEs; computing, by using the performance metrics, at least one set of rewards based on the randomly allocated sub-band; updating one or more Q-values of each state-action pair comprised in Q-matrix associated with the one or more MEs based on the at least one set of rewards to obtain an updated Q-matrix; and computing, by using the Hungarian technique of the Q-learning and Hungarian technique, a first cost matrix using the updated Q-matrix for an optimal allocation of one or more sub-bands to each of the one or more MEs in a second phase.

In an embodiment, the fairness objective ensures that the one or more MEs meet respective QoS requirement.

In an embodiment, the priority objective ensures that the one or more ME operations are targeted to a subset of MEs for achieving the QoS requirement.

In an embodiment, the step of categorizing the one or more service-level QoS constraints is based on one of (i) a service requiring a coordination across a plurality of MEs, or (ii) one or more specific MEs requiring a prioritized resource allocation for an improved overall spectral efficiency.

In an embodiment, wherein the step of performing the optimal allocation of one or more sub-bands to each of the one or more MEs in the second phase comprises: computing a sub-band bandwidth for each of the one or more MEs based on the randomly allocated sub-band assigned to each of the one or more MEs; computing the performance metrics based on the sub-band bandwidth for each of the one or more MEs based on the updated one or more Q-values of each state-action pair obtained in the first phase based on the updated position of the one or more MEs; and computing a second cost matrix based on the performance metrics; and optimally allocating, by applying the Hungarian technique on the second cost matrix, a sub-band to each of the one or more MEs.

In an embodiment, the second phase is initialized when a value of an epsilon greedy action selection parameter ($\varepsilon$) reaches a pre-defined threshold.

In an embodiment, the Signal to Noise Ratio (SNR) is computed based on a transmission power of the BS, a noise power spectral density of the THz wave in the channel, and an associated bandwidth of a sub-band under consideration.

In an embodiment, when the latency reaches a predetermined threshold each reward amongst the at least one set of rewards attains a specific integer.

In another aspect, there is provided a processor implemented system for context aware spectrum allocation for indoor TeraHertz communication in 6G. The system comprises: a memory storing instructions; one or more communication interfaces; and one or more hardware processors coupled to the memory via the one or more communication interfaces, wherein the one or more hardware processors are configured by the instructions to: receive, at an application plane of a Base Station (BS), one or more requirements specific to an indoor TeraHertz (THz) communication scenario, wherein the one or more requirements pertain to a number of Mobile-edge Entities (MEs) and one or more Key Performance Indicators (KPIs) to execute one or more ME operations; translate the one or more requirements to one or more service-level Quality of Service (QoS) constraints for the one or more ME operations; categorize the one or more service-level QoS constraints into a priority objective or a fairness objective based on the one or more ME operations; and allocate, by using a Quality-learning (Q-learning) and Hungarian technique, a sub-band to the MEs based on the one or more service-level QoS constraints categorized into the priority objective or the fairness objective, wherein the Q-learning and Hungarian technique comprises: capturing a mobility of one or more MEs based on an associated velocity at one or more time instances; updating a position of the one or more MEs from the BS based on the mobility of one or more MEs; randomly allocating, by using the Q-learning of the Q-learning and Hungarian technique, a sub-band to each of the one or more MEs during a first phase of Q-learning based on the updated position of the one or more MEs; computing a performance metrics comprising (i) a Signal to Noise Ratio (SNR), (ii) a data rate achieved using the SNR, and (iii) a latency using a propagation delay of THz wave in a channel, a processing delay of the one or more MEs, a transmission delay of the BS, for the randomly allocated sub-band assigned to each of the one or more MEs; computing, by using the performance metrics, at least one set of rewards based on the randomly allocated sub-band; updating one or more Q-values of each state-action pair comprised in Q-matrix associated with the one or more MEs based on the at least one set of rewards to obtain an updated Q-matrix; and computing, by using the Hungarian technique of the Q-learning and Hungarian technique, a first cost matrix using the updated Q-matrix for an optimal allocation of one or more sub-bands to each of the one or more MEs in a second phase.

In an embodiment, the fairness objective ensures that the one or more MEs meet respective QoS requirement.

In an embodiment, the priority objective ensures that the one or more ME operations are targeted to a subset of MEs for achieving the QoS requirement.

In an embodiment, the step of categorizing the one or more service-level QoS constraints is based on one of (i) a service requiring a coordination across a plurality of MEs, or (ii) one or more specific MEs requiring a prioritized resource allocation for an improved overall spectral efficiency.

In an embodiment, wherein the step of performing the optimal allocation of one or more sub-bands to each of the one or more MEs in the second phase comprises: computing a sub-band bandwidth for each of the one or more MEs based on the randomly allocated sub-band assigned to each of the one or more MEs; computing the performance metrics based on the sub-band bandwidth for each of the one or more MEs based on the updated one or more Q-values of each state-action pair obtained in the first phase; and computing a second cost matrix based on the performance metrics; and

optimally allocating, by applying the Hungarian technique on the second cost matrix, a sub-band to each of the one or more MEs.

In an embodiment, the second phase is initialized when a value of an epsilon greedy action selection parameter ($\varepsilon$) reaches a pre-defined threshold.

In an embodiment, the Signal to Noise Ratio (SNR) is computed based on a transmission power of the BS, a noise power spectral density of the THz wave in the channel, and an associated bandwidth of a sub-band under consideration.

In an embodiment, when the latency reaches a predetermined threshold each reward amongst the at least one set of rewards attains a specific integer.

In yet another aspect, there are provided one or more non-transitory machine-readable information storage mediums comprising one or more instructions which when executed by one or more hardware processors cause context aware spectrum allocation for indoor TeraHertz communication in 6G by receiving, at an application plane of a Base Station (BS), one or more requirements specific to an indoor TeraHertz (THz) communication scenario, wherein the one or more requirements pertain to a number of Mobile-edge Entities (MEs) and one or more Key Performance Indicators (KPIs) to execute one or more ME operations; translating the one or more requirements to one or more service-level Quality of Service (QoS) constraints for the one or more ME operations; categorizing the one or more service-level QoS constraints into a priority objective or a fairness objective based on the one or more ME operations; and allocating, by using a Quality-learning (Q-learning) and Hungarian technique, a sub-band to the MEs based on the one or more service-level QoS constraints categorized into the priority objective or the fairness objective, wherein the Q-learning and Hungarian technique comprises: capturing a mobility of one or more MEs based on an associated velocity at one or more time instances; updating a position of the one or more MEs from the BS based on the mobility of one or more MEs; randomly allocating, by using the Q-learning of the Q-learning and Hungarian technique, a sub-band to each of the one or more MEs during a first phase of Q-learning based on the updated position of the one or more MEs; computing a performance metrics comprising (i) a Signal to Noise Ratio (SNR), (ii) a data rate achieved using the SNR, and (iii) a latency using a propagation delay of THz wave in a channel, a processing delay of the one or more MEs, a transmission delay of the BS, for the randomly allocated sub-band assigned to each of the one or more MEs; computing, by using the performance metrics, at least one set of rewards based on the randomly allocated sub-band; updating one or more Q-values of each state-action pair comprised in Q-matrix associated with the one or more MEs based on the at least one set of rewards to obtain an updated Q-matrix; and computing, by using the Hungarian technique of the Q-learning and Hungarian technique, a first cost matrix using the updated Q-matrix for an optimal allocation of one or more sub-bands to each of the one or more MEs in a second phase.

In an embodiment, the fairness objective ensures that the one or more MEs meet respective QoS requirement.

In an embodiment, the priority objective ensures that the one or more ME operations are targeted to a subset of MEs for achieving the QoS requirement.

In an embodiment, the step of categorizing the one or more service-level QoS constraints is based on one of (i) a service requiring a coordination across a plurality of MEs, or (ii) one or more specific MEs requiring a prioritized resource allocation for an improved overall spectral efficiency.

In an embodiment, wherein the step of performing the optimal allocation of one or more sub-bands to each of the one or more MEs in the second phase comprises: computing a sub-band bandwidth for each of the one or more MEs based on the randomly allocated sub-band assigned to each of the one or more MEs; computing the performance metrics based on the sub-band bandwidth for each of the one or more MEs based on the updated one or more Q-values of each state-action pair obtained in the first phase; and computing a second cost matrix based on the performance metrics; and optimally allocating, by applying the Hungarian technique on the second cost matrix, a sub-band to each of the one or more MEs.

In an embodiment, the second phase is initialized when a value of an epsilon greedy action selection parameter ($\varepsilon$) reaches a pre-defined threshold.

In an embodiment, the Signal to Noise Ratio (SNR) is computed based on a transmission power of the BS, a noise power spectral density of the THz wave in the channel, and an associated bandwidth of a sub-band under consideration.

In an embodiment, when the latency reaches a predetermined threshold each reward amongst the at least one set of rewards attains a specific integer.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 depicts an exemplary system for context aware spectrum allocation for indoor TeraHertz communication in 6G, in accordance with an embodiment of the present disclosure.

FIG. 2 depicts an exemplary high-level framework of the system for context aware spectrum allocation for indoor TeraHertz communication in 6G, in accordance with an embodiment of the present disclosure.

FIG. 3 depicts an exemplary flow chart illustrating a method for context aware spectrum allocation for indoor TeraHertz communication in 6G, using the system and the framework of FIGS. 1-2, in accordance with an embodiment of the present disclosure.

FIG. 4 is a graphical representation illustrating an average data rate (Fairness) versus number of Mobile-edge Entities (MEs), in accordance with an embodiment of the present disclosure.

FIG. 5 is a graphical representation illustrating an average Spectral Efficiency (SE) (Fairness) versus number of MEs, in accordance with an embodiment of the present disclosure.

FIG. 6 is a graphical representation illustrating an average data rate (Priority) versus number of MEs, in accordance with an embodiment of the present disclosure.

FIG. 7 is a graphical representation illustrating an average Spectral Efficiency (SE) (Priority) versus number of MEs, in accordance with an embodiment of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

There is a need for efficient spectrum allocation techniques to handle increasing user density, diverse application demands and a high data rate. In this context, spectrum allocation in 6G networks should dynamically adapt to varying network conditions, user behaviour and application needs. Context aware spectrum allocation, which integrates real-time data such as user location, network load, application priority, is a promising approach to intelligent spectrum allocation in THz communication. In this section we explore current approaches to context aware spectrum allocation and examine their potential application and aspects lacking in the work done till now.

In literature (e.g., F. Zhu et al., "Spectral Efficient Resource Allocation Algorithm in Indoor TeraHertz Downlink Networks," in ICWCSP, 2021.), the authors investigated a resource allocation algorithm tailored for indoor THz networks, with a primary focus on maximizing Spectral Efficiency (SE). The literature introduced the Hungarian algorithm for sub-band allocation; however, it did not account for user mobility or varying QoS requirements in terms of data rate. Additionally, it considered equal sub-band bandwidth allocation.

In another literature (e.g., refer "A. Shafie et al., "Spectrum allocation with adaptive sub-band bandwidth for TeraHertz communication systems," IEEE Transactions on Communications, vol. 70, no. 2, pp. 1407-1422, 2021."), the authors have explored multiband spectrum allocation strategies by implementing both equal and adaptive sub-band bandwidth approaches. In this literature, the spectrum was divided into sub-bands with either equal or variable bandwidths. The study primarily focused on comparing the impact of equal versus adaptive sub-band bandwidth allocation on system performance. Their findings emphasize that adaptive sub-band bandwidth outperforms the equal bandwidth scheme in terms of achieving higher data rate and better overall SE. In yet another literature (e.g., refer "A. V. Vasanth et al., "Context-Aware Spectrum Sharing and Allocation for Multiuser-Based 5G Cellular Networks," Wireless Communications and Mobile Computing, pp. 1-7, 2022."), the authors presented context aware spectrum allocation that involved identifying primary and secondary users in 5G networks to create an efficient spectrum allocation system. The algorithm enhances spectrum utilization, resolves spectrum hole issues, and improves bandwidth efficiency compared to existing models. However, this literature focused on 5G networks thus, not including challenges associated with THz communication. The context used in the present disclosure for spectrum allocation utilizes real time environment conditions considering priority and fairness objectives.

Further, the Q-learning-based routing and spectrum allocation algorithms as authored in the literature (e.g., refer "J. Zhao et al., "Delay aware routing and spectrum allocation based on Q-learning," in Advanced Fiber Laser Conference, 2024.") improve network capacity only by considering the delay constraint. However, authors have not considered other KPI parameters. However, method and system of the present disclosure have incorporated intent based constraints such as maximizing data rate for priority users or ensure fair access. These intents are communicated using service layer specifically needed for QoS translation which incorporate delay, data rate and other KPIs required for context aware spectrum allocation. Authors in a further literature (e.g., "R. Poornachandran et al., "Technologies for context-aware dynamic bandwidth allocation," US Patent US11722430B2, 2023.") introduced technologies that enable dynamic bandwidth allocation based on the context of each compute device. The enabling technologies present significant potential for real-world deployment of the context-based allocation framework developed in the system and method of the present disclosure. This research introduces a context driven spectrum allocation framework that integrates real time environment conditions with user intent. Unlike previous works that employ spectrum allocation that do not account for user mobility or use accurate THz channel model, the method and system of the present disclosure incorporated real time environment conditions with user specific intent to optimize spectrum allocation.

The emergence of Sixth Generation (6G) wireless networks presents unprecedented opportunities for revolutionizing smart manufacturing environment through TeraHertz (THz) communication band. However, the unique characteristics of THz band, particularly their susceptibility to molecular absorption and high propagation losses, pose significant challenges for reliable indoor communication. The present disclosure addresses these challenges by context aware spectrum allocation framework/method especially designed for indoor THz communication in smart manufacturing environment. The method integrates the mobility pattern, Quality of Service (QoS) requirements of Mobile-edge Entities (MEs) constituting autonomous vehicles, industrial robots, and other intelligent agents with real time environment. The method implements a hybrid approach by combining Q-learning with Hungarian optimization (QLH) that dynamically allocates resources by considering both fairness and priority-based objectives. The present disclosure provides a valuable insight for practical deployment of THz communication systems in Industry 5.0 environments.

More specifically, the present disclosure provides a context aware spectrum allocation system and method for THz communication in smart manufacturing environment, addressing the increasing demand for high data rate and reliable wireless communication in Industry 5.0. A method implements spectrum allocation technique to optimize the spectrum utilization satisfying dynamic QoS requirements of Mobile-edge Entities (MEs) such as autonomous vehicles and robots. This technique adapts to varying user demands and channel conditions to achieve key objectives: fairness and priority-based allocation. Fairness ensures balanced resource allocation among all MEs while priority targets few MEs based on specific manufacturing requirements. Moreover, the present disclosure considers system level requirements such as data rate, Spectral Efficiency (SE) etc., and spatial level requirements such as distance of MEs from Small Base Station (SBS) and mobility pattern of MEs.

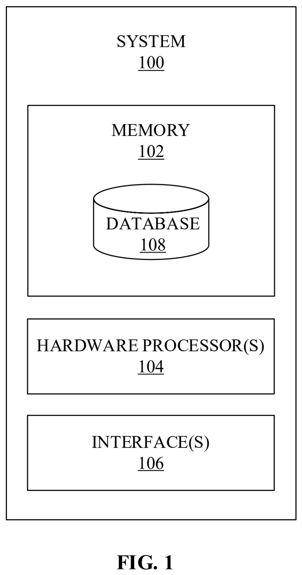

Referring now to the drawings, and more particularly to FIGS. 1 through 7, where similar reference characters denote corresponding features consistently throughout the figures, there are shown preferred embodiments, and these embodiments are described in the context of the following exemplary system and/or method.

FIG. 1 depicts an exemplary system 100 for context aware spectrum allocation for indoor TeraHertz communication in 6G, in accordance with an embodiment of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more hardware processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises information pertaining to one or more requirements specific to an indoor TeraHertz (THz) communication scenario, wherein the one or more requirements pertain to a number of Mobile-edge Entities (MEs) and one or more Key Performance Indicators (KPIs) to execute one or more ME operations (alternatively referred to as operations of MEs and interchangeably used herein), one or more service-level Quality of Service (QoS) constraints for the one or more ME operations, sub-band allocation information, performance metrics, cost matrix, epsilon greedy action selection parameter ($\varepsilon$), rewards, pre-defined/determined thresholds, and the like. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

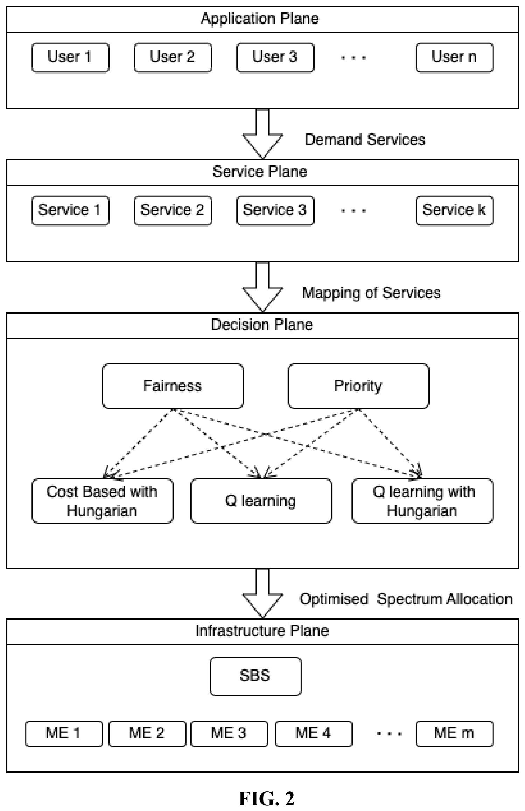

FIG. 2, with reference to FIG. 1, depicts an exemplary high-level framework of the system 100 for context aware spectrum allocation for indoor TeraHertz communication in 6G, in accordance with an embodiment of the present disclosure. As depicted in FIG. 2, the application plane serves as the user interface layer having 'n' users, acting as the primary entry point for initiating user service requests 'k'. The application plane handles user interaction by capturing user requirements/intents, the number of MEs required, and KPI demand from them. These user-specified requirements are passed to the service plane, where they are translated into specific service-level QoS constraints for the associated ME operations. Within the service plane, each distinct service is categorized based on priority and fairness objectives. The classification depends on whether the service requires coordination across all Mobile-edge Entities (MEs) or if certain MEs necessitate prioritized resource allocation that enhances data rate. Based on this classification, an appropriate sub-band allocation technique is selected for optimal allocation of spectrum.

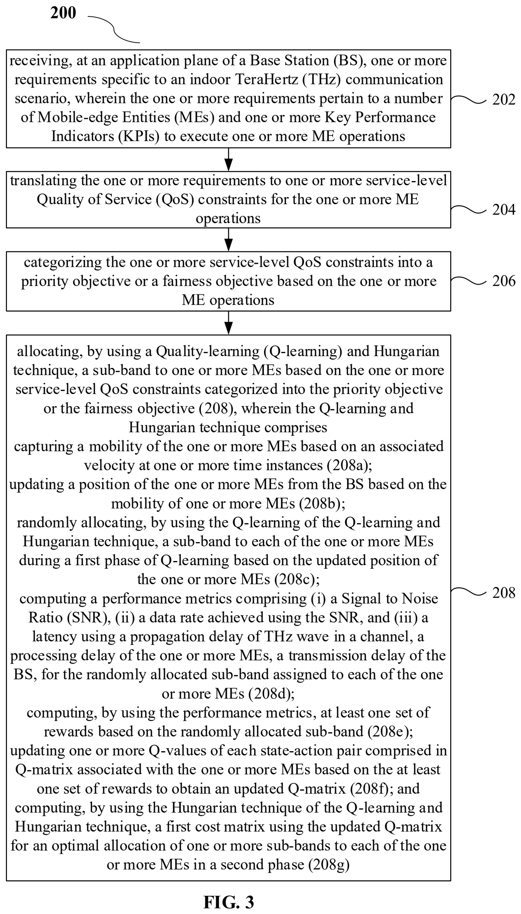

FIG. 3, with reference to FIGS. 1-2, depicts an exemplary flow chart illustrating a method for context aware spectrum allocation for indoor TeraHertz communication in 6G, using the system 100 and the framework of FIGS. 1-2, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more hardware processors 104. The steps of the method of the present disclosure will now be explained with reference to components of the system 100 of FIG. 1, the framework of the system 100 depicted in FIG. 2, and the flow diagram as depicted in FIG. 3. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

At step 202 of the method of the present disclosure, the one or more hardware processors 104 receive, at an application plane of a Base Station (BS), one or more requirements specific to an indoor TeraHertz (THz) communication scenario. The one or more requirements pertain to a number of Mobile-edge Entities (MEs) and one or more Key Performance Indicators (KPIs) to execute one or more ME operations. The system 100 implements a spectrum allocation-based framework that takes user intent and performs context-based allocation as delineated in FIG. 2. The application plane serves as the user interface layer having 'n' users, acting as the primary entry point for initiating user service requests 'k'. It handles user interaction by capturing user requirements/intents, the number of MEs required, and KPI demand from them. These user-specified requirements are passed to the service plane. Examples of MEs include but are not limited to autonomous vehicle(s), robot(s), other intelligent agents, and the like. Examples of KPIs include but are not limited to data rate requirement, latency requirement, and the like.

At step 204 of the method of the present disclosure, the one or more hardware processors 104 translate the one or more requirements to one or more service-level Quality of Service (QoS) constraints for the one or more ME operations. For constraints such as minimum data rate transmission must be achieved, an example may include, robotic arm should have a minimum of 10Gbps data rate requirement for its operation. Similarly, for latency requirement constraint, real time response is needed. Example may include, robotic arm performing precision assembly need certain level of latency.

At step 206 of the method of the present disclosure, the one or more hardware processors 104 categorize the one or more service-level QoS constraints into a priority objective or a fairness objective based on the one or more ME operations. Within the service/application plane each distinct service is categorized based on priority and fairness objectives. The classification depends on whether the service requires coordination across all Mobile-edge Entities (MEs) or if certain MEs necessitate prioritized resource allocation that enhances data rate. In other words, the categorization of the one or more service-level QoS constraints is based on (i) a service requiring a coordination across a plurality of MEs, or (ii) one or more specific MEs requiring a prioritized resource allocation for an improved overall spectral efficiency, or combination thereof. Once the service-level QoS constraints are decided, classification into the priority objective and the fairness objective ensures whether priority is to be given to certain users, for example, cell edge users, with respect to those service-level QoS constraints or fairness between MEs are required. Objective toggle is used to toggle between the priority objective and the fairness objective. For instance, one of the priority objectives is defined as cell edge users need enhanced data rate. Fairness objective ensures a minimum QoS requirement to all MEs and equitable resource distribution. Services require a plurality of MEs situated at cell edge entail that the MEs positioned far from the BS gets high data rate to accomplish the operation assigned to them. Since the system 100 or applications are operating at TeraHertz frequency band which is subject to high molecular absorption loss and high path loss, the system 100 ensures that MEs at distance do not experience degraded performance by assigning high bandwidth sub-band to those cell edge MEs. Therefore, any ME operation that requires coordination of MEs at the cell edge will have Quality of experience with an overall improved spectral efficiency.

The system 100 defines user intents with the primary objective of prioritizing MEs at the cell edge to ensure they receive high data rates (in order to mitigate deteriorated channel performance due to high propagation loss). Another intent is to ensure fulfilment of a minimum data rate requirement of all MEs without any prioritization. These intents are mapped to fairness or priority objectives.

At step 208 of the method of the present disclosure, the one or more hardware processors 104 allocate, by using a Quality-learning (Q-learning) and Hungarian technique, a sub-band to one or more MEs based on the one or more service-level QoS constraints categorized into the priority objective or the fairness objective. The step 208 includes sub-steps in employing the Q-learning and Hungarian technique. First, mobility of the one or more MEs is captured based on an associated velocity at one or more time instances, at step 208a. A position of the one or more MEs is updated from the BS based on the mobility of one or more MEs, at step 208b. Further, by using the Q-learning of the Q-learning and Hungarian technique, a sub-band is randomly allocated to each of the one or more MEs during a first phase of Q-learning based on the updated position of the one or more MEs, at step 208c. The first phase is referred to as an exploration phase. Further, a performance metrics comprising (i) a Signal to Noise Ratio (SNR), (ii) a data rate achieved using the SNR, and (iii) a latency using a propagation delay of THz wave in a channel, a processing delay of the one or more MEs, a transmission delay of the BS, is computed for the randomly allocated sub-band assigned to each of the one or more MEs, at step 208d. By using the performance metrics, at least one set of rewards is computed based on the randomly allocated sub-band, at step 208e. One or more Q-values of each state-action pair comprised in Q-matrix associated with the one or more MEs are then updated based on the at least one set of rewards to obtain an updated Q-matrix, at step 208f. Finally, by employing the Hungarian technique of the Q-learning and Hungarian technique, the system 100 computes a first cost matrix using the updated Q-matrix for an optimal allocation of one or more sub-bands to each of the one or more MEs in a second phase, at step 208g. The second phase is referred to as an exploitation phase. The second phase is initialized when a value of an epsilon greedy action selection parameter ($\varepsilon$) reaches a pre-defined threshold. The epsilon greedy action selection parameter ($\varepsilon$) value is tradeoff between exploration phase, basically the learning phase and exploitation phase, wherein epsilon is taken as 0.1 for experimentations by the present disclosure and such value shall not be construed as limiting the scope of the present disclosure. The step 208g of performing the optimal allocation of one or more sub-bands to each of the one or more MEs in the second phase includes a plurality of steps. First, a sub-band bandwidth is computed for each of the one or more MEs based on the randomly allocated sub-band assigned to each of the one or more MEs. Further, the performance metrics is computed based on the sub-band bandwidth for each of the one or more MEs based on the updated one or more Q-values of each state-action pair obtained in the first phase. A second cost matrix is then computed based on the performance metrics. The system 100 then optimally allocates, by applying the Hungarian technique on the second cost matrix, a sub-band to each of the one or more MEs. The above steps 208a through 208g are better understood by way of following description:

The system 100 considered a smart manufacturing environment for indoor THz downlink communication with different Mobile-edge Entities (MEs) comprising of diverse set of autonomous systems, such as autonomous vehicles, industrial robots, and other intelligent agents, designed to operate collaboratively within a smart manufacturing environment, comprising single BS (e.g., Small Base Station (SBS)) and set of MEs $\mathcal{M}$ = {1, 2, ..., m, ...,M}, where M denotes the total number of entities and m is denoted as the index of $m^{th}$ ME. The MEs can be categorized into two subsets:

$\mathcal{M}_y \subseteq \mathcal{M}$ : Set of stationary MEs

$\mathcal{M}_z \subseteq \mathcal{M}$ : Set of mobile MEs

where $\mathcal{M} = \mathcal{M}_y + \mathcal{M}_z$. The available THz spectrum of total bandwidth *(B)* is divided into *N* non-overlapping and unequal sub-bands, denoted as $\mathcal{A}$ = {$A_1, A_2, ... , A_n, ... , A_N$}, where n denotes the index of $n^{th}$ sub-band.

The integration of Q-learning with Hungarian algorithm is described herein. Q-learning allows the agent to learn the optimal action-selection policy through interaction with the environment, which is crucial in case of changing demand and mobility.

Q-learning works by estimating the quality, or Q-value of each state-action pair *(s,* a), where 's' represents the current state of the environment such as, ME position, channel condition, and available spectrum and 'a' denotes the action taken such as, assign a particular sub-band to ME. The Q-value stored in Q-matrix is updated iteratively using the following update expression:

$$Q(s_t, a_t) \leftarrow Q(s_t, a_t) + \alpha[r_t + \gamma \max_a Q(s_{t+1}, a) - Q(s_t, a_t)]$$

where, $r_t$ represents the immediate reward received for taking action at in state $s_t$, $\gamma$ is the discount factor that determines the importance of future rewards, and $\alpha$ is the learning rate. In the present disclosure, the parameters are taken as follows:

1. State *(s):* The state space S represents the user's position (or also referred to as ME's position and interchangeably used herein), current sub-band allocation, and channel condition like SNR, available bandwidth.
2. State (*a*): The action space Â consists of selecting a specific sub-band or reallocating spectrum to the ME from the available pool.
3. Reward (r): The reward function is defined based on achieved data rate and latency. Higher reward is given when allocated spectrum meets minimum QoS and latency is below a threshold. The reward is calculated as follows:

$$Reward = \left[ \frac{D_{m,n}}{D_{min}} * \left( 1 - \frac{W_t}{W_{max}} \right) \right]$$

$D_{min}$ refers to minimal data rate, $D_{m,n}$ denotes the data rate of $m^{th}$ ME in $n^{th}$ sub-band, $W_t$ refers to total latency, and $W_{max}$ refers to maximum latency.

The Hungarian algorithm is combinatorial optimization algorithm. It is used to find optimal assignment between two sets such that the overall cost is minimized. Here, in the present disclosure, the system 100 considered MEs and sub-bands as two sets and the objective is the optimal mapping between them.

In the present disclosure, the system 100 implements Q-Learning with Hungarian algorithm (QLH) as outlined in the pseudo code (Algorithm 1) below, for both fairness and priority objectives. In both cases, the algorithm accounts for the distinct propagation characteristics of THz communication, such as, high path loss, molecular absorption, and limited coverage range, when determining the optimal sub-band allocation. The algorithm dynamically adjusts the allocation to meet the specified QoS requirements, whether the objective is to achieve fairness across users or prioritize certain users based on predefined criteria. This adaptive approach ensures that the sub-band allocation is optimized for the unique challenges of THz communication while satisfying either fairness or priority driven objectives. In case of fairness, the reward is a function of data rate and latency ensuring the Q-matrix (matrix that stores the Q values as given in the algorithm) has reward based on the learning optimal sub-band allocation strategies over time and adapting to dynamic user movements and channel conditions. Moreover, it balances exploration, which tries new sub-bands and exploitation, wherein it uses known good sub-bands. The Hungarian algorithm solves the optimal assignment problem, ensuring no sub-band conflicts between users/MEs while maximizing overall SE by providing a globally optimal allocation given the current Q-values. In the present disclosure, the two intents expressed above, for the services with priority objective, the algorithm gives higher bandwidth sub-band to cell edge MEs. Reward calculation makes sure that the priority user/ME gets the sub-band with high reward value. For the services with fairness objective, allocation of sub-bands with different bandwidths takes place considering the data rate requirement of individual ME i.e., higher data rate requirement is met with sub-band allocation of higher bandwidth. The Q-learning acts on user/ME level by learning individual user/ME sub-band preferences, adapts to user/ME mobility patterns and considers individual QoS requirements, whereas Hungarian algorithm acts on system level, ensuring no conflicts in allocation and maximizes overall system performance. QoS as set by user is captured, suppose the QoS requirement is the minimum data rate requirement, as this minimum data rate also forms part of reward function, if the data rate is more than the minimum data rate high reward is given, less than the minimum data rate, reward becomes less. When the latency reaches a predetermined threshold the at least one set of rewards attains a specific integer (e.g., zero or negative value). If the latency hits maximum set latency or goes beyond maximum latency the reward function becomes zero and/or negative, that sub-band is most unlikely to get allocated. The Q-learning component handles the temporal and user-specific aspects, while the Hungarian Algorithm handles the spatial and system-wide optimization, creating a unique solution for sub-band allocation in wireless networks.

As mentioned above, high path loss significantly limits THz communication systems, primarily due to molecular absorption and spreading losses. While molecular absorption remains stable during short transmission windows, it varies considerably over longer distances. This study utilizes curve fitting to model the molecular absorption coefficient $k(f)$ across a wide frequency range (e.g., "D. Morales and J. M. Jornet, "ADAPT: An Adaptive Directional Antenna Protocol for medium access control in TeraHertz communication networks," Ad Hoc Networks, vol. 119, p. 102540, 2021."), revealing an exponential relationship within the Positive Absorption Coefficient Slope Regions (PACSR) and Negative Absorption Coefficient Slope Regions (NACSR). Consequently, a free-space direct ray channel transfer function, $L_{m,n}(d, f)$ is derived below to address these challenges in THz communication (e.g., J. Wang et al., "A novel 3D space-time-frequency non-stationary channel model for 6G THz indoor communication," in IEEE WCNC, 2020.").

$$L_{m,n}(d,f) = \frac{C}{4\pi df} . e^{-dk(f)}$$

where, d is the distance between ME and SBS, f is the frequency, C is speed of light, $k(f)$ at f set is based on temperature (15°C), atmospheric pressure (101.30kPa), and humidity (7.5g/m$^3$) configuration as per ITU model (e.g., refer "L. Squali et al., "Rain and atmospheric gas effect on mmWave propagation for 5G," in ICSCA, 2019."). So, for a given spectrum region based on the above conditions, the values of $\alpha_1$, $\alpha_2$ and $\alpha_3$ are found. The $k(f)$ value is determined by using the equation below,

$$k(f) = e^{\alpha_1 + \alpha_2 \cdot f} + \alpha_3$$

The sub-band allocation technique is subjected to constraints outlined as follows:

1. Exclusivity constraint: Let $x_{m,n} \in \{0,1\}$ be a binary decision variable where:

$$x_{m,n} = \begin{cases} 1 \; if \; sub-band \; n \; is \; allocated \; to \; unit \; m \\ 0 \hspace{5cm} otherwise \end{cases}$$

$$\sum_{m \in \mathcal{M}} x_{m,n} \leq 1, \forall n \in \mathcal{A}$$

2. Multi-band allocation: A Mobile-edge entity m can be allocated multiple sub-bands, subject to:

$$\sum x_{m,n} \geq 0,$$

$\forall m \in \mathcal{M}, \forall n \in \mathcal{A}$

3. Allocation based on fairness and priority objectives: Fairness ensures that MEs meet their QoS requirement without being discriminated. Priority score ($g_m$) for each unit m is computed based on distance (d) and mobility factor ($V_m$) and it is denoted by,

$$g_m = f(w_1 d, w_2 V_m)$$

)

where $w_1$ and $w_2$ are weight factors pertaining to distance and mobility of MEs with respect to SBS respectively. For simplicity, the above equation is represented by following equation without loss of generality.

$$g_m = w_1 d + w_2 V_m$$

$$\sum_{\forall i} w_i = 1$$

Let the algorithm achieving fairness objective be denoted as F and G be the algorithm achieving priority objective. The spectrum allocation can be represented as follows:

$$\lambda F + (1 - \lambda) G$$

The parameter $\lambda \in \{0,1\}$ serves as a weighting factor to toggle between fairness and priority objectives. When $\lambda = 1$, the fairness criterion is enforced, whereas $\lambda = 0$ prioritizes the objectives based on specified conditions. To evaluate the system performance, Signal to Noise Ratio (SNR) is computed using below equation,

$$SNR(dB) = T_x - (N_O + 10 \cdot \log_{10}(B))$$

where $T_x$ is transmission power, $N_O$ is the noise power spectral density, $B$ is the bandwidth. The data rate ($D_{m,n}$) achieved by $m^{th}$ ME in $n^{th}$ sub-band is given by,

$$D_{m,n} = B \log(1 + SNR)$$

For latency calculation ($W_l$), the system 100 has considered propagation delay ($P_d$), processing delay ($P_c$), and

transmission delay ($P_t$). Total latency is denoted as follows:

$$W_t = P_d + P_c + P_t$$

Based on the random sub-band allocated, data rate is computed using data rate equation and latency computation equation mentioned above, and accordingly reward is obtained say - 0.3456 (this calculation is based for one set of sub-band and ME). The Q values are updated accordingly. Initially, Q value is set to 0, based on the reward obtained in the updated Q value becomes 0.0691 (this calculation is based on one set of sub-band and ME). The cost matrix is created from the updated Q values in the Q matrix as described above.

Once the priority and fairness objectives are defined, the system 100 ensures that QoS in terms of data rate is met for all MEs when fairness objectives are considered while MEs are prioritized when priority objectives are considered. To optimize the spectrum allocation, the system 100 defines optimization problem that maximizes the spectral efficiency while considering intent-based constraints. Obtaining an optimal solution for the spectrum allocation problem is computationally expensive. Spectrum allocation problem is NP-Hard based on the complexity to solve. The system 100 formulates the optimization problem with the aim of maximizing the spectral efficiency of the THz system, which needs to be solved to allocate spectrum to SBSs in real-time based on KPI need of the application and network characteristics. The ratio of the total data rates to the total occupied bandwidth is how the system 100 defines the THz system's spectral efficiency. To denote the allocation of the $n^{th}$ sub-band to $m^{th}$ user, a binary variable $x_{m,n} \in \{0,1\}$ is employed, where $x_{m,n} = 1$ signifies that the $n^{th}$ sub-band is assigned to the $m^{th}$ user, and $x_{m,n} = 0$ indicates otherwise. The term, $D_{m,n}$ denotes the data rate of $m^{th}$ user in $n^{th}$ sub-band and $p_n$, signifies the power of $n^{th}$ sub-band. The total bandwidth of the system is given by $B$. The mobility characteristics of each user are modeled using a stochastic velocity vector, which assigns a distinct speed and direction to each user. The velocity of the $m^{th}$ user is represented by $V_m$, encapsulating both the magnitude and orientation of the user's movement. Therefore, the expression for the optimization problem is,

$$\max_{\{x_{m,n}\},\{p_n\}} \frac{\sum_{m=1}^{M} \sum_{n=1}^{N} x_{m,n} D_{m,n}}{\sum_{m=1}^{M} \sum_{n=1}^{N} x_{m,n} B}$$

Such that $P1: \sum_{n=1}^{N} p_n \leq P_{max}$, $P2: p_n \geq 0$, $P3: \sum_{n=1}^{N} x_{m,n} D_{m,n} \geq D_{min}$, $P4: \sum_{m=1}^{M} x_{m,n} \leq 1$, $P5: x_{m,n} \in \{0,1\}$, and P6: $V_m \leq V_{max}$

where all users' transmit power is restricted by constraint $P1$ to be less than $P_{max}$. The transmit power's non-negative power restriction is represented by P2. In order to ensure that the QoS requirement is met, P3 stipulates that each user's achievable data rate must be greater than or equal to the minimal data rate $D_{min}$ in order to sustain system performance. To ensure that each sub-band can only be assigned to a maximum of one user, P4 and P5 are enforced. The constraint P6 is restricted to be less than $V_{max}$ and imposed on user mobility to more accurately represent real-world movement patterns in an indoor THz communication system. This constraint ensures that the dynamic nature of user mobility, including variations in speed and direction, is accounted for, during system performance evaluations, leading to a more realistic and reliable simulation of indoor environments.

For simplicity, intra and inter-band interference are not considered due to two key factors: each user is assigned a dedicated sub-band, eliminating intra-band interference, and the presence of guard intervals effectively mitigates inter-band interference. Furthermore, the impact of blockages on the channel state is excluded, as the focus is on the baseline performance of the system without environmental impairments, thus allowing for a clearer analysis of spectrum allocation strategies.

**Performance evaluation:**

The system 100 and method of the present disclosure have considered an indoor smart manufacturing environment with dimensions of (20m x 15m x 3m), wherein a Small Base Station (SBS) is deployed to accommodate m MEs. As described above, some of the MEs are static and some are mobile. The QoS requirement of each of the users in terms of minimum data rate requirement is considered. For simplicity, the system 100 focused exclusively on downlink transmission. Initially, the users were randomly placed. The channel state information and the current position of the users have been updated after each sensing period. The system 100 utilized the ITU model as known in the art (e.g., refer "L. Squali et al., "Rain and atmospheric gas effect on mmWave propagation for 5G," in ICSCA, 2019.") to identify appropriate Transmission Windows (TWs) within the allocated spectrum. The system 100 and method of the present disclosure conducted each scenario with at least 100 different random seeds over 100 iterations. Table 1 lists the simulation parameters that are considered in the experiments.

Table 1

| Parameter Name | Parameter Value |
|---|---|
| Heights of SBSs and MEs | 3m, 1.6m |
| Transmit Power | 30dBm |
| Antenna gains | 25dBi, 15dBi |
| Noise spectral density | -174dBm/Hz |
| Spectrum Range | 0.556THz - 0.670THz |
| Minimum Guard band bandwidth | 0.5GHz |
| Sub-band bandwidths | 1GHz - 5GHz |
| Modulation Schemes | QPSK, [16 64 256]-QAM |
| Number of MEs | 5, 10, 15, 20, 25 |
| Maximum Latency | 100$\mu$sec |
| ME Distribution | Random |
| Velocities of MEs | 0.5m/s - 2m/s |
| Traffic Generation | Random |

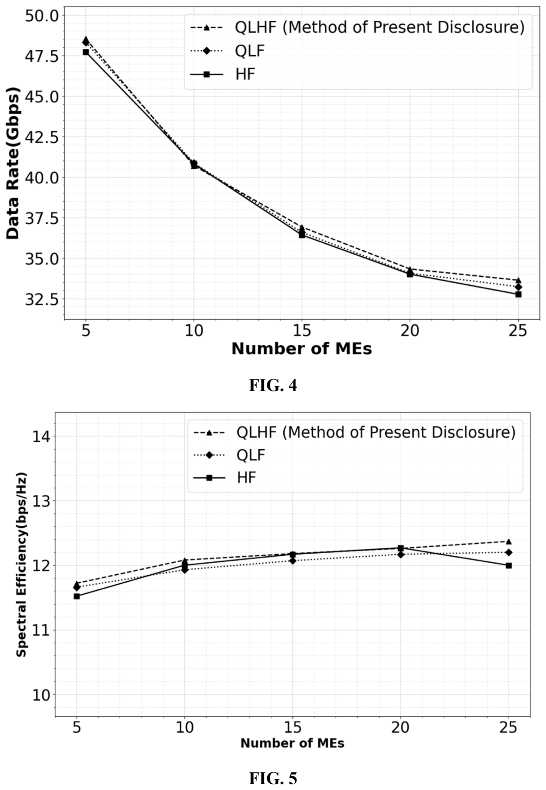

The system 100 and method of the present disclosure compared the implemented performance of Q-Learning integrated with Hungarian optimization (QLH) against two other approaches such as, cost-based Hungarian optimization and standalone Q-learning. FIG. 4, with reference to FIGS. 1 through 3, is a graphical representation illustrating an average data rate (Fairness) versus number of MEs, in accordance with an embodiment of the present disclosure. In FIG. 4, Q-learning with Hungarian for Fairness (QLHF) provides consistently better average data rate when considering fairness objectives as described above, as compared to other two algorithms, viz., and Q-learning for Fairness (QLF) and cost-based Hungarian optimization for Fairness (HF). This consistent performance is observed as the number of MEs increases. Similar observations are depicted in FIG. 5, representing average Spectral Efficiency (SE) as the number of MEs increases. More specifically, FIG. 5, with reference to FIGS. 1 through 4, is a graphical representation illustrating an average Spectral Efficiency (SE) (Fairness) versus number of MEs, in accordance with an embodiment of the present disclosure.

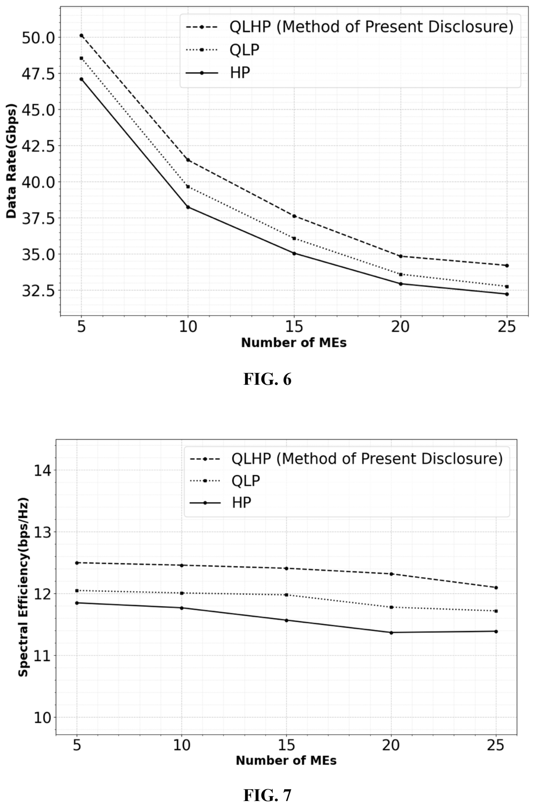

When considering priority objectives as described above in FIG. 6, the results indicate that as the number of MEs increases, the Q-Learning with Hungarian for Priority (QLHP) consistently outperforms the other algorithms, Q-Learning for Priority (QLP) and cost-based Hungarian optimization for Priority (HP), in terms of data rate. Similar observations are illustrated for SE in FIG. 7. More specifically, FIG. 6, with reference to FIGS. 1 through 5, is a graphical representation illustrating an average data rate (Priority) versus number of MEs, in accordance with an embodiment of the present disclosure. FIG. 7, with reference to FIGS. 1 through 6, is a graphical representation illustrating an average Spectral Efficiency (SE) (Priority) versus number of MEs, in accordance with an embodiment of the present disclosure. It is observed that QLHP consistently outperforms other algorithms, which holds true for both the scenarios where fairness and priority objectives are considered. The Hungarian optimization transforms Q-learning, from user/ME-centric to system level optimization, improving SE.

The pseudo code (Algorithm 1) of the Q-Learning with Hungarian Algorithm (QLH) for context aware spectrum allocation for indoor TeraHertz communication in 6G, is illustrated by way of example as below:

12

Initialize:

Exploration rate $(\epsilon)$, Learning rate $(\alpha)$, Discount rate $(\gamma)$, Objective toggle $(\lambda)$, Number of users $(num\_users)$, sub-bands $= num\_users$, sub-band bandwidths $(BWs)$, Q-matrix $(sub - bands * num\_users)$, User position, and User velocity.

**for each timestep** $t$:

    update user positions based on velocity

    if $\lambda = 0$:

        calculate priority score $(g_m)$ for each user $m$ using the corresponding equation

    else:

$$g_m = 0$$

        Q-Learning: Update for each user $m$ and sub-band $n$:

        if random(0,1)$< \epsilon$:

            Choose random sub-band

            Chosen sub-band= random sub-band

        else:

            Chosen sub-band=argmax(Q-matrix)

        *Calculate SNR*

        *Calculate data rate*

*Calculate latency*

**if** $\lambda = 0$:

      calculate reward

      reward=reward*(1+$g_m$)

else:

      calculate reward

Q-value update

      Update Q-matrix

Hungarian Algorithm assignment:

      Create cost matrix from Q-matrix

      Cost_matrix=-(Q-matrix*$BWs$)

Apply Hungarian algorithm for optimal assignment

Store sub-band assignments

Calculate final data rates and metrics for timestep $t$

    end

Reliable, high-speed TeraHertz wireless communication in an indoor environment has been one of the challenges. The present disclosure improves data rate, spectral efficiency and overall system performance while addressing the specific challenges to THz communication. In state of the art, THz spectrum allocation strategy does not account for combination of user mobility and accurate THz channel model. In addition to this, the conventional approaches also do not account for the context of the user (such as KPI requirements, priority, fairness, etc.). The present disclosure provides system and method that incorporate real time environment conditions/context with user specific intent to optimize spectrum allocation, thus enabling adaptation to varying user demands and channel conditions to satisfy key objectives: fairness and priority-based allocation.

Non-availability of real-time 6G network data is a challenge. Therefore, creation of realistic network scenarios and test-cases for validation of the algorithm is another challenge. The present disclosure enables context-based decision making that includes user intent, mobility and environment for decision making process for spectrum allocation. User intent is expressed as maximizing the data rate for users based on the KPI requirements. However, many user intents can be expressed, and the above examples of user intent shall not be construed as limiting the scope of the present disclosure. Whereas context is the real time conditions like user position, mobility, channel condition etc. under which user intents are enforced. Spectrum allocation is Non-Deterministic Polynomial-time hard problem (NP-Hard). Therefore, the system and method implement a hybrid technique along with combinatorial optimization with user intent-based constraints, for real time context aware decision, and to perform multi objective optimization that includes maximizing data rate and spectral efficiency for both fairness and priority objective.

More specifically, the present disclosure provides a context aware spectrum allocation system and method that dynamically allocate spectrum resource based on real time user mobility patterns and Key Performance Indicator (KPI) requirement for THz communication (e.g., for 6G and beyond networks) in indoor smart manufacturing environments. The Q-learning algorithm integrated with Hungarian allocation technique as implemented by the system 100 and method of the present disclosure demonstrates superior performance in terms of both system data rate and Spectral Efficiency (SE) even as the network scales with increasing number of users. The comprehensive analysis by the system 100 reveals that the hybrid approach maintains consistent performance metrics, particularly crucial for latency-critical manufacturing applications. The comparative analysis with existing allocation schemes validates that the method of the present disclosure achieves better SE in both the cases such as fairness and priority-based sub-band allocation.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more hardware processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method, comprising:

   receiving, at an application plane of a Base Station (BS), via one or more hardware processors, one or more requirements specific to an indoor TeraHertz (THz) communication scenario (202), wherein the one or more requirements pertain to a number of Mobile-edge Entities (MEs) and one or more Key Performance Indicators (KPIs) to execute one or more ME operations;
   translating, via the one or more hardware processors, the one or more requirements to one or more service-level Quality of Service (QoS) constraints for the one or more ME operations (204);
   categorizing, via the one or more hardware processors, the one or more service-level QoS constraints into a priority objective or a fairness objective based on the one or more ME operations (206); and
   allocating, by using a Quality-learning (Q-learning) and Hungarian technique via the one or more hardware processors, a sub-band to one or more MEs based on the one or more service-level QoS constraints categorized into the priority objective or the fairness objective (208), wherein the Q-learning and Hungarian technique comprises:

capturing a mobility of the one or more MEs based on an associated velocity at one or more time instances (208a);

updating a position of the one or more MEs from the BS based on the mobility of one or more MEs (208b);

randomly allocating, by using the Q-learning of the Q-learning and Hungarian technique, a sub-band to each of the one or more MEs during a first phase of Q-learning based on the updated position of the one or more MEs (208c);

computing a performance metrics comprising (i) a Signal to Noise Ratio (SNR), (ii) a data rate achieved using the SNR, and (iii) a latency using a propagation delay of THz wave in a channel, a processing delay of the one or more MEs, a transmission delay of the BS, for the randomly allocated sub-band assigned to each of the one or more MEs (208d);

computing, by using the performance metrics, at least one set of rewards based on the randomly allocated sub-band (208e);

updating one or more Q-values of each state-action pair comprised in Q-matrix associated with the one or more MEs based on the at least one set of rewards to obtain an updated Q-matrix (208f); and

computing, by using the Hungarian technique of the Q-learning and Hungarian technique, a first cost matrix using the updated Q-matrix for an optimal allocation of one or more sub-bands to each of the one or more MEs in a second phase (208g).

2. The processor implemented method as claimed in claim 1, wherein the fairness objective ensures that the one or more MEs meet respective QoS requirement, and the priority objective ensures that the one or more ME operations are targeted to a subset of MEs for achieving the QoS requirement.

3. The processor implemented method as claimed in claim 1, wherein the step of categorizing the one or more service-level QoS constraints is based on one of (i) a service requiring a coordination across a plurality of MEs, or (ii) one or more specific MEs requiring a prioritized resource allocation for an improved overall spectral efficiency.

4. The processor implemented method as claimed in claim 1, wherein the step of performing the optimal allocation of one or more sub-bands to each of the one or more MEs in the second phase comprises:

computing a sub-band bandwidth for each of the one or more MEs based on the randomly allocated sub-band assigned to each of the one or more MEs;

computing the performance metrics based on the sub-band bandwidth for each of the one or more MEs based on the updated one or more Q-values of each state-action pair obtained in the first phase;

computing a second cost matrix based on the performance metrics; and

optimally allocating, by applying the Hungarian technique on the second cost matrix, a sub-band to each of the one or more MEs.

5. The processor implemented method as claimed in claim 1, wherein the second phase is initialized when a value of an epsilon greedy action selection parameter ($\varepsilon$) reaches a pre-defined threshold.

6. The processor implemented method as claimed in claim 1, wherein the SNR is computed based on a transmission power of the BS, a noise power spectral density of the THz wave in the channel, and an associated bandwidth of a sub-band under consideration,.

7. The processor implemented method as claimed in claim 1, wherein when the latency reaches a predetermined threshold each reward amongst the at least one set of rewards attains a specific integer.

8. A system (100), comprising:

a memory (102) storing instructions;

one or more communication interfaces (106); and

one or more hardware processors (104) coupled to the memory (102) via the one or more communication interfaces (106), wherein the one or more hardware processors (104) are configured by the instructions to:

receive, at an application plane of a Base Station (BS), one or more requirements specific to an indoor TeraHertz (THz) communication scenario, wherein the one or more requirements pertain to a number of Mobile-edge Entities (MEs) and one or more Key Performance Indicators (KPIs) to execute one or more ME operations;

translate the one or more requirements to one or more service-level Quality of Service (QoS) constraints for the one or more ME operations;

categorize the one or more service-level QoS constraints into a priority objective or a fairness objective based on the one or more ME operations; and

allocate, by using a Quality-learning (Q-learning) and Hungarian technique, a sub-band to one or more MEs based on the one or more service-level QoS constraints categorized into the priority objective or the fairness objective, wherein the Q-learning and Hungarian technique comprises:

capturing a mobility of the one or more MEs based on an associated velocity at one or more time instances; updating a position of the one or more MEs from the BS based on the mobility of one or more MEs;

randomly allocating, by using the Q-learning of the Q-learning and Hungarian technique, a sub-band to each of the one or more MEs during a first phase of Q-learning based on the updated position of the one or more MEs;

computing a performance metrics comprising (i) a Signal to Noise Ratio (SNR), (ii) a data rate achieved using the SNR, and (iii) a latency using a propagation delay of THz wave in a channel, a processing delay of the one or more MEs, a transmission delay of the BS, for the randomly allocated sub-band assigned to each of the one or more MEs;

computing, by using the performance metrics, at least one set of rewards based on the randomly allocated sub-band;

updating one or more Q-values of each state-action pair comprised in Q-matrix associated with the one or more MEs based on the at least one set of rewards to obtain an updated Q-matrix; and

computing, by using the Hungarian technique of the Q-learning and Hungarian technique, a first cost matrix using the updated Q-matrix for an optimal allocation of one or more sub-bands to each of the one or more MEs in a second phase.

9. The system as claimed in claim 8, wherein the fairness objective ensures that the one or more MEs meet respective QoS requirement, and wherein the priority objective ensures that the one or more ME operations are targeted to a subset of MEs for achieving the QoS requirement,.

10. The system as claimed in claim 8, wherein the step of categorizing the one or more service-level QoS constraints is based on one of (i) a service requiring a coordination across a plurality of MEs, or (ii) one or more specific MEs requiring a prioritized resource allocation for an improved overall spectral efficiency.

11. The system as claimed in claim 8, wherein the step of performing the optimal allocation of one or more sub-bands to each of the one or more MEs in the second phase comprises:

computing a sub-band bandwidth for each of the one or more MEs based on the randomly allocated sub-band assigned to each of the one or more MEs;

computing the performance metrics based on the sub-band bandwidth for each of the one or more MEs based on the updated one or more Q-values of each state-action pair obtained in the first phase; and

computing a second cost matrix based on the performance metrics; and

optimally allocating, by applying the Hungarian technique on the second cost matrix, a sub-band to each of the one or more MEs.

12. The system as claimed in claim 8, wherein the second phase is initialized when a value of an epsilon greedy action selection parameter ($\varepsilon$) reaches a pre-defined threshold.

13. The system as claimed in claim 8, wherein the Signal to Noise Ratio is computed based on a transmission power of the BS, a noise power spectral density of the THz wave in the channel, and an associated bandwidth of a sub-band under consideration.

14. The system as claimed in claim 8, wherein when the latency reaches a predetermined threshold each reward amongst the at least one set of rewards attains a specific integer.

15. One or more non-transitory machine-readable information storage mediums comprising one or more instructions which when executed by one or more hardware processors cause:

receiving, at an application plane of a Base Station (BS), one or more requirements specific to an indoor TeraHertz (THz) communication scenario, wherein the one or more requirements pertain to a number of Mobile-edge Entities (MEs) and one or more Key Performance Indicators (KPIs) to execute one or more ME operations;

translating the one or more requirements to one or more service-level Quality of Service (QoS) constraints for the one or more ME operations;

categorize the one or more service-level QoS constraints into a priority objective or a fairness objective based on the one or more ME operations; and

allocating, by using a Quality-learning (Q-learning) and Hungarian technique, a sub-band to one or more MEs based on the one or more service-level QoS constraints categorized into the priority objective or the fairness objective, wherein the Q-learning and Hungarian technique comprises:

capturing a mobility of the one or more MEs based on an associated velocity at one or more time instances;

updating a position of the one or more MEs from the BS based on the mobility of one or more MEs;

randomly allocating, by using the Q-learning of the Q-learning and Hungarian technique, a sub-band to each of the one or more MEs during a first phase of Q-learning based on the updated position of the one or more MEs;

computing a performance metrics comprising (i) a Signal to Noise Ratio (SNR), (ii) a data rate achieved using the SNR, and (iii) a latency using a propagation delay of THz wave in a channel, a processing delay of the one or more MEs, a transmission delay of the BS, for the randomly allocated sub-band assigned to each of the one or more MEs;

computing, by using the performance metrics, at least one set of rewards based on the randomly allocated sub-band;

updating one or more Q-values of each state-action pair comprised in Q-matrix associated with the one or more MEs based on the at least one set of rewards to obtain an updated Q-matrix; and

computing, by using the Hungarian technique of the Q-learning and Hungarian technique, a first cost matrix using the updated Q-matrix for an optimal allocation of one or more sub-bands to each of the one or more MEs in a second phase.

SYSTEM
100

MEMORY
102

DATABASE
108

HARDWARE PROCESSOR(S)
104

INTERFACE(S)
106

**FIG. 1**

**FIG. 2**

**200**

receiving, at an application plane of a Base Station (BS), one or more requirements specific to an indoor TeraHertz (THz) communication scenario, wherein the one or more requirements pertain to a number of Mobile-edge Entities (MEs) and one or more Key Performance Indicators (KPIs) to execute one or more ME operations — 202

translating the one or more requirements to one or more service-level Quality of Service (QoS) constraints for the one or more ME operations — 204

categorizing the one or more service-level QoS constraints into a priority objective or a fairness objective based on the one or more ME operations — 206

allocating, by using a Quality-learning (Q-learning) and Hungarian technique, a sub-band to one or more MEs based on the one or more service-level QoS constraints categorized into the priority objective or the fairness objective (208), wherein the Q-learning and Hungarian technique comprises
capturing a mobility of the one or more MEs based on an associated velocity at one or more time instances (208a);
updating a position of the one or more MEs from the BS based on the mobility of one or more MEs (208b);
randomly allocating, by using the Q-learning of the Q-learning and Hungarian technique, a sub-band to each of the one or more MEs during a first phase of Q-learning based on the updated position of the one or more MEs (208c);
computing a performance metrics comprising (i) a Signal to Noise Ratio (SNR), (ii) a data rate achieved using the SNR, and (iii) a latency using a propagation delay of THz wave in a channel, a processing delay of the one or more MEs, a transmission delay of the BS, for the randomly allocated sub-band assigned to each of the one or more MEs (208d);
computing, by using the performance metrics, at least one set of rewards based on the randomly allocated sub-band (208e);
updating one or more Q-values of each state-action pair comprised in Q-matrix associated with the one or more MEs based on the at least one set of rewards to obtain an updated Q-matrix (208f); and
computing, by using the Hungarian technique of the Q-learning and Hungarian technique, a first cost matrix using the updated Q-matrix for an optimal allocation of one or more sub-bands to each of the one or more MEs in a second phase (208g) — 208

**FIG. 3**

**FIG. 4**

**FIG. 5**

**FIG. 6**

**FIG. 7**

## EUROPEAN SEARCH REPORT

**Application Number**

EP 25 22 2903

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HAMDAN MUTASEM ET AL: "Combining Machine Learning and Classical Optimization Techniques in Vehicle to Vehicle Communication Network", 1 January 1900 (1900-01-01), INTELLIGENT DATA ENGINEERING AND AUTOMATED LEARNING – IDEAL 2019; [LECTURE NOTES IN COMPUTER SCIENCE; LECT.NOTES COMPUTER], PAGE(S) 350 - 358, XP047526487, ISSN: 0302-9743 ISBN: 978-3-030-33606-6 * the whole document * | 1-15 | INV. H04W72/0453 H04W24/02 |
| A | AKRAM SHAFIE ET AL: "Spectrum Allocation with Adaptive Sub-band Bandwidth for Terahertz Communication Systems", ARXIV.ORG CORNELL UNIVERSITY LIBRARY, 201 OLIN LIBRARY CORNELL UNIVERSITY ITHACA, NY 14853, 5 July 2022 (2022-07-05), XP091262793, DOI: 10.1109/TCOMM.2021.3139887 * the whole document * | 1-15 | |
| A | CN 113 612 558 A (UNIV SOUTHEAST) 5 November 2021 (2021-11-05) * the whole document * | 1-15 | TECHNICAL FIELDS SEARCHED (IPC)<br><br>H04W<br>G06E<br>G06N |
| A | ZHU FANSHU ET AL: "Spectral Efficient Resource Allocation Algorithm in Indoor Terahertz Downlink Networks", 2021 13TH INTERNATIONAL CONFERENCE ON WIRELESS COMMUNICATIONS AND SIGNAL PROCESSING (WCSP) IEEE, 20 October 2021 (2021-10-20), pages 1-5, XP034032819, DOI: 10.1109/WCSP52459.2021.9613471 [retrieved on 2021-11-11] * the whole document * | 1-15 | |

The present search report has been drawn up for all claims

| Place of search | Date of completion of the search | Examiner |
|---|---|---|
| The Hague | 6 May 2026 | Manuel, Grégory |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 2903

This annex lists the patent family members relating to the patent documents cited in  the above-mentioned European search report.
The members are as contained in the European Patent Office EDP file on
The European Patent Office is in no way liable for these particulars which are merely given for the purpose of information.

06-05-2026

| Patent document cited in search report | Publication date | Patent family member(s) | Publication date |
|---|---|---|---|
| CN 113612558 A | 05-11-2021 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202521007790

- US 11722430 B2, R. Poornachandran

**Non-patent literature cited in the description**

- **R. LIU et al.** Beginning of journey toward 6G: Vision and framework. *IEEE Communications Magazine*, 2023, vol. 61 (10), 8-9
- **V. PETROV et al.** Last Meter Indoor TeraHertz Wireless Access: Performance Insights and Implementation Roadmap. *IEEE Communications Magazine*, 2018, vol. 56 (6), 158-165
- **J. LEE et al.** Spectrum for 5G: Global Status, Challenges, and Enabling Technologies. *IEEE Communications Magazine*, 2018, vol. 56 (3), 12-18
- **Z. LIN et al.** Millimeter-Wave Propagation Modeling and Measurements for 5G Mobile Networks. *IEEE Wireless Communications*, 2019, vol. 26 (1), 72-77
- **A. SHAFIE et al.** Spectrum allocation with adaptive sub-band bandwidth for TeraHertz communication systems. *IEEE Transactions on Communications*, 2021, vol. 70 (2), 1407-1422

- **A. V. VASANTH et al.** Context-Aware Spectrum Sharing and Allocation for Multiuser-Based 5G Cellular Networks. *Wireless Communications and Mobile Computing*, 2022, 1-7
- **J. ZHAO et al.** Delay aware routing and spectrum allocation based on Q-learning. *Advanced Fiber Laser Conference*, 2024
- **D. MORALES** ; **J. M. JORNET**. ADAPT: An Adaptive Directional Antenna Protocol for medium access control in TeraHertz communication networks. *Ad Hoc Networks*, 2021, vol. 119, 102540
- **J. WANG et al.** A novel 3D space-time-frequency non-stationary channel model for 6G THz indoor communication. *IEEE WCNC*, 2020
- **L. SQUALI et al.** Rain and atmospheric gas effect on mmWave propagation for 5G. *ICSCA*, 2019